(19) Europäisches Patentamt
European Patent Office
Office européen des brevets

(11) **EP 3 358 324 A1**

(12) **DEMANDE DE BREVET EUROPEEN**

(43) Date de publication:
**08.08.2018 Bulletin 2018/32**

(51) Int Cl.:
**G01K 17/20** (2006.01)   **G01K 15/00** (2006.01)
**G01K 19/00** (2006.01)

(21) Numéro de dépôt: **18155010.4**

(22) Date de dépôt: **02.02.2018**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD TN**

(30) Priorité: **03.02.2017 FR 1750903**

(71) Demandeur: **Commissariat à l'Energie Atomique
et aux Energies
Alternatives
75015 Paris (FR)**

(72) Inventeurs:
• **ROBERT, Sylvain
91120 PALAISEAU (FR)**
• **FOUCQUIER, Aurélie
73000 CHAMBERY (FR)**
• **SUARD, Frédéric
73000 JACOB BELLECOMBETTE (FR)**
• **ZAIDI, Houda
92160 ANTONY (FR)**

(74) Mandataire: **Collet, Alain et al
Marks & Clerk France
Conseils en Propriété Industrielle
Immeuble Visium
22, Avenue Aristide Briand
94117 Arcueil Cedex (FR)**

(54) **PROCEDE DE DETERMINATION D'UNE GRANDEUR THERMIQUE D'UNE ZONE D'UN BATIMENT**

(57) L'invention concerne un procédé, mis en oeuvre par ordinateur, de détermination d'une valeur d'au moins une grandeur thermique (Rth1, Rth2, C) d'une zone d'un bâtiment soumise à au moins une donnée thermique environnementale et ayant un comportement thermique réel, comprenant les étapes suivantes :
• Construction (203) d'un modèle thermique initial de la zone ayant un comportement thermique théorique, le modèle thermique initial utilisant la valeur de la au moins une grandeur thermique (Rth1, Rth2, C), la valeur de la au moins une grandeur thermique étant initialisée à une valeur initiale ($Rth1_0$, $Rth2_0$, $C_0$),
• Entrée dans le modèle thermique initial de la zone d'au moins une donnée thermique environnementale issue d'une mesure,
• Exécution (205) d'un algorithme d'identification au modèle thermique initial modifiant la valeur initiale ($Rth1_0$, $Rth2_0$, $C_0$) de la au moins une grandeur thermique jusqu'à obtenir un modèle thermique calibré ayant un comportement thermique sensiblement égal au comportement thermique réel,
• Extraction (207) de la valeur de la au moins une grandeur thermique (Rth1, Rth2, C) du modèle thermique calibré.

FIG.1

EP 3 358 324 A1

**Description**

**Domaine de l'invention**

L'invention se situe dans le domaine de la caractérisation thermique d'un bâtiment et concerne un procédé, un dispositif et un produit programme d'ordinateur pour la détermination d'une grandeur thermique d'une zone d'un bâtiment.

**Etat de la Technique**

Dans l'univers du bâtiment, il existe deux types d'approche de caractérisation des performances thermiques d'un bâtiment.

Le premier type d'approche est basé sur les méthodes dites inverses et vise à déterminer les performances globales du bâtiment, par exemple la résistance thermique et/ou la capacité thermique du bâtiment. Cette approche a pour principe d'utiliser des mesures ou données générées à partir de logiciels de simulation pour identifier les paramètres thermiques du bâtiment à l'aide d'algorithmes dédiés. Elle s'appuie sur un modèle numérique du bâtiment, c'est-à-dire une description de l'enveloppe du bâtiment et de ses éventuels systèmes de chauffage et/ou refroidissement. Cette approche a pour objectif de fiabiliser les prédictions réalisées à l'aide de modèles (en particulier pour une utilisation dans le cadre de stratégies de contrôle-commande). Cette approche vise aussi à déterminer les grandeurs thermiques de l'enveloppe du bâtiment dans sa globalité et non pas localement.

Le second type d'approche est une approche de détermination des performances thermiques de parois à l'aide d'une instrumentation dédiée. Cette approche vise à caractériser finement les propriétés thermo-physiques de parois et fait appel à un protocole expérimental précis, comprenant dans certains cas des dispositifs de chauffage supplémentaires pour créer artificiellement une différence entre les températures de surfaces de la paroi, et à des capteurs permettant de mesurer des variables liées aux grandeurs physiques locales de la paroi (par exemple températures de surface, flux de chaleur). Cette approche est fiable mais elle présente le défaut de nécessiter une instrumentation avancée et intrusive. En effet, cette approche nécessite d'utiliser des capteurs d'utilisation peu courante (comme les thermocouples, les fluxmètres, ...) et de les mettre en oeuvre selon un protocole expérimental contraignant. De plus, pour certaines configurations de bâtiment, il peut être difficile voire impossible de déployer ces capteurs, notamment dans le cas d'une mesure en étage élevé ou si le revêtement de façade rend la pose des capteurs difficile, comme c'est le cas sur un mur en briques.

Il en ressort que lorsque l'objectif de l'approche est de fiabiliser les modèles en vue de réaliser des prédictions, la vérification de la validité du modèle est réalisée sur la base d'une comparaison entre les prédictions réalisées à l'aide du modèle calibré et des mesures. La validité des paramètres thermiques de l'enveloppe en tant que tels ne fait pas partie des objectifs visés et n'est donc pas assurée.

Lorsque l'objectif est de caractériser les performances thermiques du bâtiment, la principale limite est liée au fait que ces méthodes se focalisent sur la caractérisation du bâtiment dans son entier. Elles nécessitent donc d'avoir la connaissance de la géométrie complète du bâtiment, information qu'il est souvent difficile d'obtenir sur les bâtiments existants. Par ailleurs, ces méthodes ne permettent de calculer que des coefficients globaux (par exemple le coefficient de déperdition global). Ce type de méthode requiert généralement en outre de collecter, en plus de la température, des mesures supplémentaires (telles que le rayonnement et/ou l'humidité). Certaines de ces approches peuvent aussi nécessiter d'avoir une connaissance préalable des coefficients globaux de l'enveloppe du bâtiment, et se cantonnent à une répartition de cette valeur globale sur les couches internes modélisées de la paroi.

**Résumé de l'invention**

L'invention vise à pallier tout ou partie des problèmes cités plus haut en proposant un procédé de détermination d'une valeur d'une grandeur thermique d'une zone d'un bâtiment, telle que la résistance thermique et/ou la capacité thermique des parois et ouvrants, dans un temps limité et de façon fiable à partir de mesures simples, peu coûteuses et non intrusives. Il en résulte une facilité et robustesse d'utilisation du procédé car l'utilisateur peut déterminer la valeur d'une grandeur thermique d'une paroi ou d'un ouvrant d'une zone précise, c'est-à-dire localement, grâce à une instrumentation simple et sans connaissances particulières du bâtiment.

A cet effet, l'invention a pour objet un procédé, mis en oeuvre par ordinateur, de détermination d'une valeur d'au moins une grandeur thermique d'une zone d'un bâtiment soumise à au moins une donnée thermique environnementale et ayant un comportement thermique réel, comprenant:

- Une étape de construction d'un modèle thermique initial de la zone ayant un comportement thermique théorique, le modèle thermique initial utilisant la valeur de la au moins une grandeur thermique, la valeur de la au moins une grandeur thermique étant initialisée à une valeur initiale,

- Une étape d'entrée dans le modèle thermique initial de la zone d'au moins une donnée thermique environnementale issue d'une mesure,
- Une étape d'exécution d'un algorithme d'identification au modèle thermique initial modifiant la valeur initiale de la au moins une grandeur thermique jusqu'à obtenir un modèle thermique calibré ayant un comportement thermique sensiblement égal au comportement thermique réel,
- Une étape d'extraction de la valeur de la au moins une grandeur thermique du modèle thermique calibré.

Selon un mode de réalisation, le procédé de détermination selon l'invention comprend préalablement à l'étape de construction du modèle thermique initial de la zone une étape de relevé des caractéristiques géométriques de la zone du bâtiment, et l'étape de construction du modèle thermique initial est basée sur le relevé des caractéristiques géométriques de la zone du bâtiment.

Avantageusement, le procédé selon l'invention comprend après l'étape d'extraction de la valeur de la au moins une grandeur thermique du modèle thermique calibré une étape d'affichage de la valeur de la au moins une grandeur thermique.

Avantageusement, l'étape de construction du modèle thermique initial est réalisée par analogie électrique.

Avantageusement, le procédé selon l'invention comprend, préalablement à l'étape d'entrée de la au moins une donnée thermique environnementale issue d'une mesure, une étape de mesure de la au moins une donnée thermique environnementale sur une période prédéterminée pour obtenir la au moins une donnée thermique environnementale issue d'une mesure.

Avantageusement, l'étape de mesure de la au moins une donnée thermique environnementale sur une période prédéterminée comprend la mesure d'au moins une température intérieure de la zone et une température extérieure à la zone.

Avantageusement, l'étape de mesure de la au moins une donnée thermique environnementale sur une période prédéterminée comprend la mesure du rayonnement global du bâtiment.

Avantageusement, l'étape d'exécution d'un algorithme consiste à exécuter un algorithme de recherche d'une solution optimale avec une approche de régression.

Avantageusement, l'algorithme d'identification est le krigeage, ou un algorithme Particle Swarm Optimization (PSO) ou un algorithme Support Vector Machines (SVM) ou une combinaison d'un algorithme Particle Swarm Optimization (PSO) et Support Vector Machines (SVM).

Selon un mode de réalisation, la au moins une grandeur thermique est la résistance thermique d'une paroi de la zone et/ou la capacité thermique de la zone.

L'invention concerne aussi un dispositif de détermination d'une valeur d'au moins une grandeur thermique d'une zone d'un bâtiment soumise à au moins une donnée thermique environnementale et ayant un comportement thermique réel, le dispositif comprenant des moyens pour mettre en oeuvre les étapes du procédé selon l'invention.

L'invention concerne aussi un produit programme d'ordinateur, ledit programme d'ordinateur comprenant des instructions de code permettant d'effectuer les étapes du procédé de détermination selon l'invention, lorsque ledit programme est exécuté sur un ordinateur.

Plusieurs applications peuvent bénéficier des avantages apportés par l'invention. Par exemple, l'invention peut servir de support à un processus de certification thermique de bâtiment, dans laquelle une sélection de zones thermiques peut être caractérisée afin de vérifier la conformité du bâtiment à un standard ou un label donné. La rapidité et la simplicité de l'invention permettent en effet d'envisager, pour un coût limité, son application simultanée à plusieurs zones du bâtiment.

Cette invention s'applique à tout type de bâtiment, sans distinction d'usage, c'est-à-dire qu'il s'agisse d'un bâtiment résidentiel, tertiaire, collectif, industriel ou d'une maison individuelle. L'invention peut s'appliquer à des bâtiments neufs, nouvellement construits, et à des bâtiments existants, sans distinction d'époque.

L'invention concerne aussi un dispositif de détermination d'une valeur d'au moins une grandeur thermique d'une zone d'un bâtiment soumise à au moins une donnée thermique environnementale et ayant un comportement thermique réel, le dispositif comprenant des moyens pour mettre en oeuvre les étapes d'un tel procédé.

L'invention concerne aussi un produit programme d'ordinateur, ledit programme d'ordinateur comprenant des instructions de code permettant d'effectuer les étapes du procédé de construction, lorsque ledit programme est exécuté sur un ordinateur.

## Description des figures

L'invention sera mieux comprise et d'autres avantages apparaîtront à la lecture de la description détaillée d'un mode de réalisation donné à titre d'exemple, description illustrée par le dessin joint dans lequel :

- la figure 1 représente schématiquement le principe du procédé de détermination d'une valeur d'au moins une grandeur thermique de deux zones d'un bâtiment selon l'invention,
- la figure 2 représente schématiquement les étapes d'un mode de réalisation d'un procédé de détermination d'une valeur d'au moins une grandeur thermique d'une zone d'un bâtiment selon l'invention,
- la figure 3 représente schématiquement un exemple d'un modèle thermique initial utilisant les grandeurs thermiques à déterminer selon l'invention,
- la figure 4 représente un exemple de zone à laquelle le procédé selon l'invention a été appliqué pour en déterminer la valeur des grandeurs thermiques.

## Description détaillée de l'invention

Par souci de clarté, les mêmes éléments porteront les mêmes repères dans les différentes figures.

Dans la description, l'invention est décrite pour une (ou plusieurs) zone(s). Le terme zone est à comprendre comme une zone thermique qui est un espace d'un bâtiment supposé thermiquement homogène. Une zone thermique peut consister en une seule pièce ou en plusieurs pièces adjacentes. Une zone thermique est ceinte de parois (sur les côtés, sur le haut et sur le bas) de même nature ou non, pouvant comprendre des ouvrants (porte(s) et/ou fenêtre(s)). Chaque paroi peut être opaque ou non, par exemple un mur traditionnel ou une paroi vitrée. La zone peut comprendre ou non des parois donnant sur l'extérieur du bâtiment. Elle peut s'étendre horizontalement sur une ou plusieurs pièces adjacentes et/ou verticalement sur plusieurs étages du bâtiment.

La configuration la plus courante, mais non limitative, pour l'application de l'invention est celle dans laquelle une zone thermique correspond à une pièce du bâtiment dont une paroi comprend généralement un ou des ouvrant(s) et donne sur l'extérieur du bâtiment, les autres parois de la zone thermique donnant sur des pièces adjacentes.

L'intérêt de l'invention réside dans la possibilité d'évaluer de façon fiable notamment la résistance thermique réelle des parois et ouvrants d'une zone donnée d'un bâtiment existant et de répéter cette évaluation, de façon simultanée ou en séquence sur autant de zones que nécessaire.

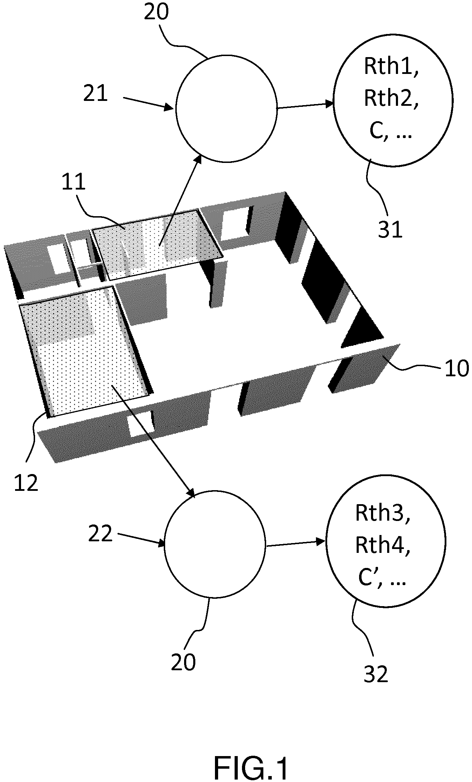

La **figure** 1 représente schématiquement le principe du procédé de détermination d'une valeur d'au moins une grandeur thermique de deux zones 11, 12 d'un bâtiment 10 selon l'invention. La détermination d'une valeur d'au moins une grandeur thermique d'une zone 11, 12 du bâtiment 10 selon l'invention est représentée symboliquement par la référence 20. Chaque zone 11, 12 du bâtiment 10 est soumise à au moins une donnée thermique environnementale 21, 22. Cette au moins une donnée thermique environnementale peut être la température extérieure, la température des zones adjacentes, le rayonnement solaire appliqué à la zone, etc. Chaque zone 11, 12 du bâtiment a un comportement thermique réel. Ce comportement thermique réel se traduit notamment par l'évolution de la température intérieure de la zone 11, 12 en fonction de la ou des données thermiques d'environnement auxquelles elle est soumise.

Le procédé selon l'invention est basé sur l'utilisation d'algorithmes d'identification capables de calculer la valeur des grandeurs thermiques des parois de la zone 11, 12 à partir de données géométriques de la zone considérée (longueur et hauteur des parois et ouvrants) et des mesures 21, 22 de températures d'ambiance (c'est-à-dire température intérieure de la zone) et extérieure et rayonnement global réalisées sur une période prédéterminée par exemple plusieurs jours. L'exécution d'un algorithme d'identification permet de déterminer la valeur d'au moins une grandeur thermique 31, 32 de la zone considérée, comme expliqué en détail ci-après. La grandeur thermique peut être la résistance thermique d'une paroi (par exemple Rth1, Rth2 pour la zone 11 et Rth3, Rth4 pour la zone 12), la capacité thermique de la zone (par exemple C pour la zone 11 et C' pour la zone 12),....

Une caractéristique importante du procédé selon l'invention est la détermination locale des grandeurs thermiques d'une zone. En effet, les mesures des données thermiques environnementales sont effectuées au niveau d'une zone, en vue de qualifier la valeur de la grandeur thermique des parois et ouvrants de cette zone et non de déterminer la valeur de la grandeur thermique relative au bâtiment dans son ensemble.

Une autre caractéristique importante du procédé selon l'invention est qu'il peut comprendre une étape de mesure de la au moins une donnée thermique environnementale sur une période prédéterminée à partir d'une instrumentation simple et non intrusive. En effet, cette étape de mesure ne s'appuie que sur des mesures de températures et ne nécessite aucune mesure additionnelle (telle que la mesure d'un flux thermique par exemple).

Une autre caractéristique importante du procédé selon l'invention est que l'étape de mesure peut être réalisée sur une période prédéterminée assez courte, par exemple quelques jours, ou une semaine, et de préférence deux semaines. Par ailleurs, pendant la période prédéterminée sur laquelle a lieu l'étape de mesure, la zone considérée peut être soit passive (c'est-à-dire non occupée, avec une évolution non contrôlée de la température), soit faire l'objet d'apports thermiques (chauffage ou refroidissement) à l'aide d'un système de chauffage ou de refroidissement contrôlé, auquel cas l'apport de puissance issu du chauffage doit être connu. La zone considérée peut également être occupée, et dans ce cas, afin de ne pas perdre en précision lors de la détermination des grandeurs thermiques, il est souhaitable de connaître les apports (chauffage, aération, etc.). Il en résulte une flexibilité en termes d'occupation de la zone puisqu'il n'est pas nécessaire d'évacuer la zone.

Enfin, l'étape d'exécution de l'algorithme d'identification du procédé selon l'invention nécessite peu de puissance de calcul puisqu'il peut être mis en oeuvre sur un ordinateur de bureau et/ou à distance.

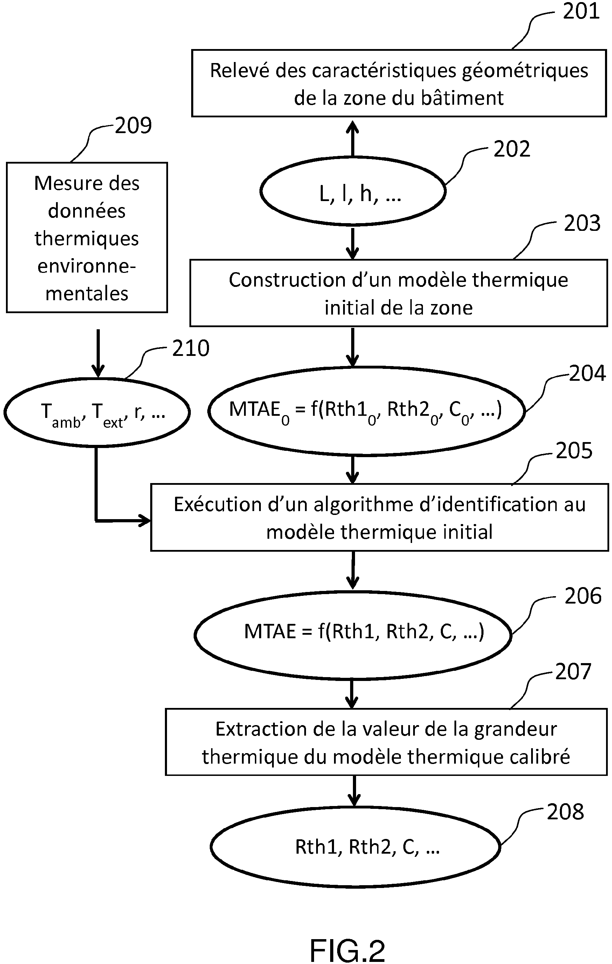

La **figure 2** représente schématiquement les étapes d'un mode de réalisation d'un procédé de détermination d'une valeur d'au moins une grandeur thermique d'une zone d'un bâtiment selon l'invention.

Procédé, mis en oeuvre par ordinateur, de détermination d'une valeur d'au moins une grandeur thermique d'une zone d'un bâtiment soumise à au moins une donnée thermique environnementale et ayant un comportement thermique réel. Selon l'invention, le procédé comprend une étape 203 de construction d'un modèle thermique initial 204 de la zone ayant un comportement thermique théorique, le modèle thermique initial 204 utilisant la valeur de la au moins une grandeur thermique Rth1, Rth2, C, la valeur de la au moins une grandeur thermique étant initialisée à une valeur initiale $Rth1_0$, $Rth2_0$, $C_0$. L'étape 203 de construction du modèle thermique initial peut être réalisée par analogie électrique, comme expliqué ultérieurement.

Préalablement à l'étape 203 de construction du modèle thermique initial de la zone, le procédé selon l'invention peut comprendre une étape 201 de relevé de caractéristiques géométriques basiques de la zone du bâtiment. Le relevé des caractéristiques géométriques de la zone concernée comprend notamment le relevé de la dimension des murs, du sol, du plafond et des ouvrants. Les parois sont supposées planes. Il n'est pas nécessaire de connaître le positionnement du ou des ouvrants dans les parois ainsi que l'épaisseur des murs. Ce relevé peut être effectué sur site ou les caractéristiques géométriques de la zone peuvent être extraites d'un plan ou d'un modèle géométrique préexistant. Et l'étape 203 de construction du modèle thermique initial est basée sur le relevé des caractéristiques géométriques de la zone du bâtiment. Le modèle est créé sur la base des caractéristiques géométriques relevées. Les valeurs des grandeurs thermiques, que l'on cherche donc à déterminer, sont initialisées de façon arbitraire. L'étape 203 de construction du modèle thermique initial peut comprendre une étape de simplification visant à fusionner les parois afin de focaliser l'identification sur les paramètres d'intérêt et réduire le temps de calcul. Par exemple, dans le cas d'une zone à six parois latérales dont une seule paroi donne sur l'extérieur, si on souhaite déterminer les valeurs des grandeurs thermiques de la paroi donnant sur l'extérieur, il est possible de fusionner dans le modèle thermique les cinq autres parois latérales intérieures, ainsi que le plafond et le sol, en une seule paroi intérieure.

Le procédé selon l'invention comprend une étape 210 d'entrée dans le modèle thermique initial 204 de la zone d'au moins une donnée thermique environnementale issue d'une mesure 209.

Préalablement à l'étape 210 d'entrée de la au moins une donnée thermique environnementale issue d'une mesure, le procédé selon l'invention peut avantageusement comprendre une étape 209 de mesure de la au moins une donnée thermique environnementale sur une période prédéterminée pour obtenir la au moins une donnée thermique environnementale issue d'une mesure. La au moins une donnée thermique environnementale peut être les températures et le rayonnement. Les températures comprennent la température d'ambiance de la zone considérée, la température d'ambiance des zones adjacentes à la zone considérée et la température extérieure. Ces données peuvent être mesurées à l'aide de l'instrumentation du bâtiment si elle le permet, ou à l'aide de capteurs de températures et d'enregistreurs de données déployés spécifiquement pour le procédé de détermination. La durée de la mesure des données thermiques environnementales peut être de quelques jours et avantageusement supérieure ou égale à quinze jours. Le rayonnement est le rayonnement global, obtenu soit à partir de données météorologiques de la zone géographique dans laquelle se situe le bâtiment, soit à partir des données mesurées par la station météorologique du bâtiment.

La période d'échantillonnage des mesures de températures doit être horaire a minima, avantageusement de trente minutes et préférentiellement de quinze minutes.

Le procédé selon l'invention comprend une étape 205 d'exécution d'un algorithme d'identification au modèle thermique initial modifiant la valeur initiale de la au moins une grandeur thermique $Rth1_0$, $Rth2_0$, $C_0$ jusqu'à obtenir un modèle thermique calibré ayant un comportement thermique sensiblement égal au comportement thermique réel. Autrement dit, l'étape 205 est itérative jusqu'à l'obtention d'un modèle thermique calibré qui, soumis aux données thermiques environnementales, résulte en un comportement thermique proche du comportement thermique réel de la zone. Par exemple, il est souhaitable que le modèle thermique calibré présente une évolution de sa température intérieure de la zone en fonction des données thermiques d'environnement sensiblement identique à l'évolution constatée pendant l'étape 209 de mesure. Pour une précision maximale des résultats obtenus, on peut exiger que l'évolution thermique du modèle thermique calibrée soit exactement la même que celle de la zone. Néanmoins, afin de réduire le temps de calcul, il est possible de tolérer une différence que l'utilisateur peut spécifier, comme il est usuel de le faire dans ce type de calculs.

L'étape 205 d'exécution d'un algorithme consiste à exécuter un algorithme de recherche d'une solution optimale avec par exemple une approche de régression.

Enfin, le procédé selon l'invention comprend une étape 207 d'extraction de la valeur 208 de la au moins une grandeur thermique Rth1, Rth2, C du modèle thermique calibré. La au moins une grandeur thermique peut être la résistance thermique d'une paroi de la zone et/ou la capacité thermique de la zone.

Le procédé selon l'invention peut comprendre, après l'étape 207 d'extraction de la valeur 208 de la au moins une grandeur thermique Rth1, Rth2, C du modèle thermique calibré une étape d'affichage de la valeur de la au moins une grandeur thermique. L'affichage peut être fait sur l'écran de l'ordinateur. Il est ainsi aisé de comparer la valeur des grandeurs thermiques avec des valeurs normées pour vérifier la conformité à un standard ou label donné de la zone ou plus généralement du bâtiment.

Comme déjà mentionné, l'étape 209 de mesure de la au moins une donnée thermique environnementale sur une période prédéterminée peut comprendre la mesure d'au moins une température intérieure de la zone et une température extérieure à la zone. L'étape 209 de mesure de la au moins une donnée thermique environnementale sur une période prédéterminée peut comprendre la mesure du rayonnement global du bâtiment.

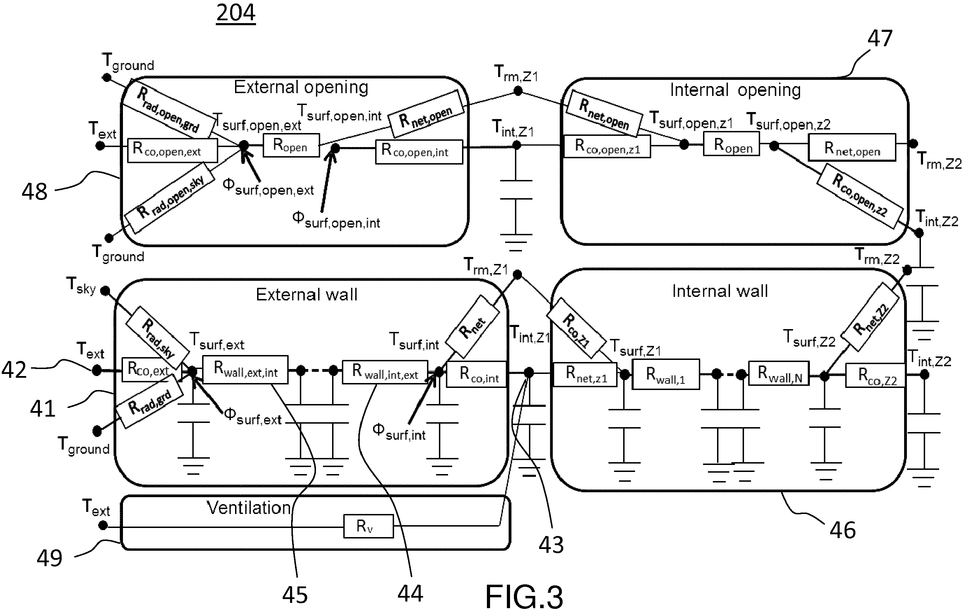

La **figure** 3 représente schématiquement un exemple d'un modèle thermique initial utilisant les grandeurs thermiques à déterminer selon l'invention. L'exemple présenté sur la figure 3 est un modèle thermique par analogie électrique, qui sera désigné dans la suite par l'abréviation MTAE. Le modèle MTAE repose sur une analogie électrique permettant de représenter tout ou partie d'un bâtiment sous la forme d'un circuit électrique Résistance-Capacité (RC). L'intérêt de ce modèle réside en particulier dans sa flexibilité : il permet de modéliser tout le bâtiment ou seulement une partie de ce dernier, mais également de faire varier le niveau de détails de la modélisation (nombre de parois modélisées, nombre de couches dans les parois, etc.). Dans son principe, cette approche permet de représenter la topologie du bâtiment à l'aide d'un graphe non dirigé G où un noeud représente un point de mesure de la température. Par exemple le noeud 42 correspond à la température extérieure de la paroi extérieure 41 et le noeud 43 correspond à la température ambiante de la zone considérée. Ce graphe est composé de noeuds $\aleph$ et d'arcs E. Chaque noeud $i \in \aleph$ est associé à une température Ti et à une capacité Ci, et chaque arête $a=(i \in \aleph, j \in \aleph) \in E$ est associée à une résistance R(i,j) telle que R(i,j)=R(j,i). Ainsi, la résistance 44 est égale à la résistance 45 et correspond à la résistance thermique de la paroi extérieure 41. Les parois intérieures peuvent être définies séparément ou bien fusionnées entre elles, toutes ou quelques unes seulement. Sur la figure 3, les parois intérieures ont été fusionnées en une paroi intérieure 46. A cette paroi intérieure 46 peut être associé un ouvrant 47. De même, un ouvrant extérieur 48 peut être défini. Il est aussi possible d'ajouter d'autres éléments dans le modèle, comme par exemple la ventilation 49.

La dynamique du circuit est décrite par un système d'équations différentielles du premier ordre de la forme :

$$\vec{C}.\frac{\partial \vec{T}}{\partial t}(t) = A\,\vec{T}(t) + \vec{\Phi}(t)$$

où $\vec{T}(t) = [T_1(t), T_2(t), \ldots, T_n(t)]'$ est le vecteur des températures au temps t, $\vec{C} = [C_1, C_2, \ldots, C_n]'$ le vecteur des capacités, et $\vec{\Phi} = [\phi_1, \phi_2, \ldots, \phi_n]'$ le vecteur des flux (radiatif, solaire et net). Les éléments de la matrice $A = (A_{ij}, i, j \in \aleph)$ sont donnés par:

$$A_{ij} = \begin{cases} 0 & \text{si } i \neq j \text{ et } (i,j) \notin \mathcal{E} \\ \dfrac{1}{R_{ij}} & \text{si } i \neq j \text{ et } (i,j) \in \mathcal{E} \\ -\displaystyle\sum_{j \neq i} A_{ij} & \text{si } i = j \end{cases}$$

Ce modèle peut être, en fonction des objectifs visés et des caractéristiques de la zone, plus ou moins détaillé. L'approche MTAE offre en effet la possibilité de moduler le nombre de parois modélisées en fusionnant certaines parois entre elles. L'intérêt de la fusion de parois, comme mentionné précédemment, est de réduire le nombre de paramètres à identifier et, ainsi, de garantir la convergence des algorithmes d'identification et de limiter le temps de calcul. La configuration la plus courante consiste à modéliser indépendamment la ou les parois donnant sur l'extérieur, mais à fusionner l'ensemble des parois internes, pour être en mesure de déduire la résistance thermique de la ou des paroi(s) externe(s) et la capacité totale de la zone. Dans ce cas, la zone est alors modélisée sous la forme de deux parois (et ouvrants associés), une externe et une interne représentant la fusion des parois internes. Comme on peut le voir, sur la figure 3, les murs sont supposés être monocouches et sont modélisés à l'aide d'un circuit 2R3C (2 résistances, 3 capacités). Il est à noter que cet exemple est donné uniquement à titre d'illustration : l'approche peut en effet s'appliquer avec des approches alternatives de modélisation (exemple : modélisation multicouche).

Une fois les étapes 201 (relevé des caractéristiques géométriques de la zone), 203 (construction du modèle thermique initial de la zone), 209 (mesure des données thermiques environnementales) effectuées, il faut ensuite réaliser l'étape 205 d'exécution d'un algorithme d'identification afin d'obtenir la valeur des grandeurs thermiques recherchées. Ces dernières peuvent varier selon les données disponibles en entrée, mais a minima, il s'agit du coefficient de transfert de chaleur de chaque paroi modélisée (U=1/RS, où R est la résistance de la paroi et S sa surface), de la capacité (C) de chaque paroi, du coefficient de transfert de chaleur (U) de chaque ouvrant.

L'invention peut se baser sur tout type d'algorithme d'identification : de nombreuses approches existent et, en fonction des objectifs visés en priorité, sont plus ou moins adaptées. Dans le cadre de la mise en oeuvre expérimentale de l'invention, trois approches ont été étudiées : l'algorithme PSO (pour son acronyme anglo-saxon Particle Swarm Optimization), ainsi que deux approches basées sur des modèles de régression (une combinaison des Support Vector Machines (appelée SVR, correspondant à la version de régression (sortie à valeur continue) du Support Vector Machines (sortie à valeur binaire)) et de l'algorithme PSO, et le krigeage). Une étude comparative basée sur un cas d'étude simple ayant suggéré la supériorité du krigeage en termes de robustesse et de performances, c'est ce dernier algorithme qui est privilégié.

Le krigeage est une technique d'interpolation statistique qui permet d'approximer un modèle numérique donné y(x) à l'aide de la combinaison d'une fonction de régression et d'un processus stochastique :

$$K(\mathrm{x}) = \mathcal{F}(\mathrm{x}) + \mathrm{z}(\mathrm{x})$$

où K est le modèle de krigeage (i.e. méta-modèle) approximant la réponse réelle $K(\mathrm{x}) \in \mathbb{R}$ pour un vecteur d'entrée de dimension $\mathrm{n} : \mathrm{x} \in \mathrm{D} \subset \mathbb{R}^{\mathrm{n}}$, $\mathcal{F}$ (x) la fonction de régression et z(x) le processus stochastique, $\mathrm{D} \subset \mathbb{R}^{\mathrm{n}}$ représente les contraintes (bornes) s'appliquant à la variable x. Dans le cadre de l'invention, le modèle numérique dont on souhaite approximer le comportement est l'erreur $y(\mathrm{x}) \in \mathbb{R}$ entre la température mesurée dans la zone visée et la température calculée à l'aide du modèle MTAE. Si l'on note $T_{MTAE}(\mathrm{x})$ la température calculée par le modèle MTAE, où $\mathrm{x} \in \mathrm{D} \subset \mathbb{R}^{\mathrm{n}}$ est le vecteur des paramètres à identifier dans le modèle MTAE (résistances, capacités...) et $\mathrm{D} \subset \mathbb{R}^{\mathrm{n}}$ est l'espace des solutions possibles physiquement, et *Tref* la température mesurée de la zone visée, on cherche donc à approximer l'erreur y(x) telle que:

$$\| y(x) = T_{MTAE}(x) - Tref \|$$

à l'aide du modèle de krigeage K(x) tel que :

$$\mathrm{K}(\mathrm{x}) = \mathcal{F}(\mathrm{x}) + \mathrm{z}(\mathrm{x})$$

Dans le cadre du prototypage de l'invention, la fonction de régression $\mathcal{F}$ (x) est un modèle de régression polynomial consistant en une combinaison linéaire de p fonctions f(*x*) polynomiales combinant les variables d'entrée :

$$\mathcal{F}(\mathrm{x}) = \sum_{i=1}^{p} \beta_i f_i(x)$$

Où $(\beta_1, \dots, \beta_p) \in \mathbb{R}^p$ sont les coefficients de régression.

La partie stochastique quant à elle est un processus gaussien centré caractérisé par sa fonction de covariance $cov(Z(x),Z(u)) = \sigma^2 R(x,u)$ où $\sigma^2$ représente la variance de *Z* et $R(x,u)$ représente la fonction de corrélation. Cette fonction de corrélation, dans le cadre du prototypage, est une fonction de corrélation exponentielle.

Sur la base de ces hypothèses, le principe de l'algorithme de krigeage est de déterminer un ensemble de modèles de krigeage K valides (i.e. respectant un critère d'erreur prédéfini), puis d'identifier au sein de cet ensemble le modèle de krigeage donnant le meilleur résultat, et enfin, d'optimiser les paramètres d'entrée pour minimiser l'erreur. Ce processus est répété jusqu'à atteindre un critère de convergence prédéfini (seuil sur l'erreur, nombre d'itérations maximal). Plus précisément, l'algorithme comprend les étapes suivantes :

1. Sélection au sein de l'espace des solutions d'un ensemble r d'échantillons des paramètres recherchés ($x_1$, ..., $x_r$) où $x_i \in D \subset \mathbb{R}^n$ . Pour chacun de ces échantillons, exécution du modèle MTAE et génération d'un vecteur ($y_1$, ..., $y_r$) d'erreurs par rapport au modèle MTAE.

2. Création et calibrage d'un ensemble de modèles de krigeage $K_i$, i = 1...r, chaque modèle $K_i$, i = 1...r étant calibré à l'aide de l'ensemble des échantillons à l'exception de $x_i$.

3. Vérification de la validité des modèles de krigeage à l'aide d'une validation croisée : chaque modèle est testé sur la base de l'échantillon $x_i$ et le critère de validité se base sur l'erreur constatée.

○ Dans le cas où l'un (ou plusieurs) des modèles de krigeage est (sont) invalide(s), on ajuste l'échantillon ($x_1$,...,$x_r$) et on exécute de nouveau le modèle MTAE sur les éléments de l'échantillon modifiés. On réitère ensuite l'étape 3 et ce jusqu'à l'obtention d'un échantillon valide.

4. Recherche au sein de l'échantillon du modèle de krigeage le plus performant et sur la base de ce dernier, recherche des valeurs des paramètres $x_{min}$ minimisant l'erreur (algorithme du gradient).

○ Dans le cas où le critère de convergence (critère basé sur l'erreur) n'est pas atteint, on étend l'échantillon et on relance l'algorithme.

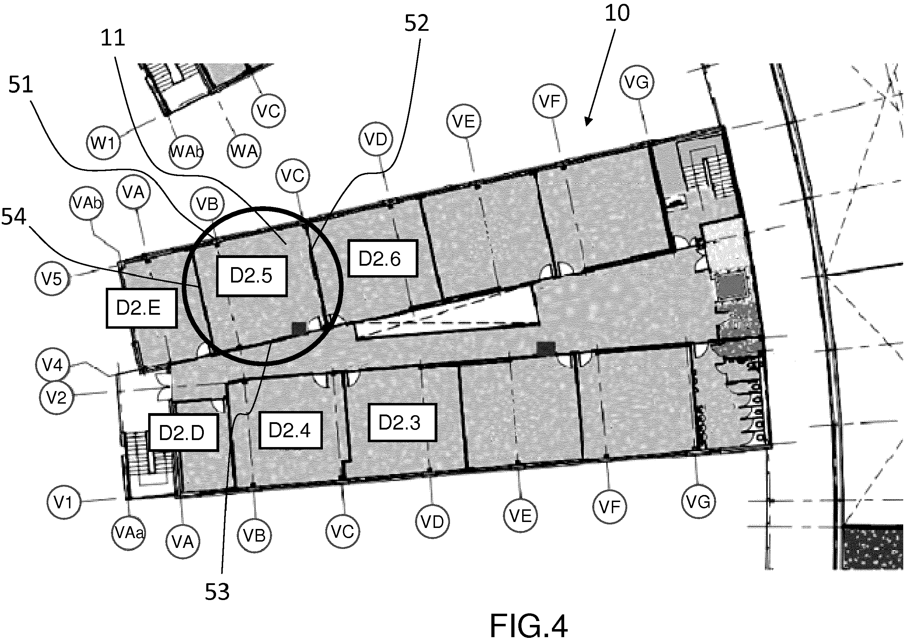

La **figure 4** représente un exemple de zone 11 à laquelle le procédé selon l'invention a été appliqué pour en déterminer la valeur des grandeurs thermiques. Il s'agit de déterminer les caractéristiques thermiques d'une pièce (référencée D2.5) d'un bâtiment scolaire 10 situé à Cardiff (Royaume-Uni). Cette zone 11 est de forme rectangulaire, possède une paroi 51 donnant sur l'extérieur (orientation nord, nord-ouest) équipée d'un ouvrant, et trois parois opaques 52, 53, 54 donnant sur des zones adjacentes.

L'ensemble des relevés géométriques (hauteur et largeur des parois et ouvrants) ont été effectués et utilisés pour la configuration initiale du modèle MTAE. Les données de températures : température extérieure, température d'ambiance de la zone ciblée et des zones adjacentes ont été mesurées pendant deux semaines (quinze jours).

La zone n'était pas occupée mais chauffée, l'apport de puissance issu du chauffage étant connu. Le rayonnement a été négligé en raison de l'orientation (nord, nord-ouest) et de la saison.

Les mesures ont ensuite été utilisées pour identifier les paramètres du modèle MTAE. Les paramètres visés étaient : la résistance thermique R ($K.m^2/W$) et la capacité thermique C ($kJ/m^2/K$).

Deux configurations du modèle MTAE ont été étudiées. La première, dans laquelle toutes les parois 51, 52, 53, 54 ont été fusionnées, visait à déterminer la capacité de la zone thermique 11 (Czone). La deuxième, dans laquelle l'ensemble des parois internes 52, 53, 54 ont été fusionnées mais la paroi externe 51 est conservée indépendante, visait à déterminer la résistance de la paroi externe 51 (Rext).

Les résultats obtenus ont été les suivants :

Czone = 27.9 $kJ/m^2/K$ (configuration 1)
Rext = 1.7 $K.m^2/W$ (configuration 2).

Afin de valider ces résultats, la résistance thermique de la paroi externe 51 a été calculée à l'aide de la méthode ISO 9869-1 (« Isolation thermique -- éléments de construction -- mesurage in-situ de la résistance thermique et du coefficient de transmission thermique -- Partie 1 : méthode du fluxmètre », aussi disponible en version anglaise : « Thermal insulationBuilding elements -- In-situ measurement of thermal résistance and thermal transmittance -- Part 1: Heat flow meter method », accessible depuis le site internet : http://www.iso.org/iso/catalogue_detail.htm?csnumber=59697). La capacité de la zone 11 a été calculée à l'aide de la méthode QUB/e (disponible dans la publication Comptes Rendus Physique, 13(4), pp. 383-390, « Quick measurements of energy efficiency of buildings » de Mangematin, E., Pandraud, G. & Roux, D., 2012). Les résultats confirment la précision des calculs réalisés à l'aide du procédé selon l'invention :

$$Czone = 27.6 +/- 0.8 \ kJ/m^2/K \ (QUB/e)$$

$$Rext = 1.7 +/- 0.15 \ K.m^2/W \ (ISO \ 9869\text{-}1)$$

Comme mentionné précédemment, plusieurs applications de l'invention sont envisageables. Elle peut être mise en oeuvre pour la qualification des performances thermiques de l'enveloppe ou une partie d'un bâtiment ancien (par exemple en vue de la rénovation totale ou partielle de ce bâtiment ancien), dont les caractéristiques sont non ou imparfaitement connues. L'invention peut aussi être mise en oeuvre pour la qualification des performances thermiques de l'enveloppe ou une partie d'un bâtiment nouvellement construit, en vue de vérifier que ces performances sont conformes aux spécifications données en conception et, potentiellement, d'identifier des défauts de construction (garantie de performances). Dans ce cadre, l'invention peut donc servir de base à un processus de certification des performances thermiques du bâtiment en entier ou d'une zone du bâtiment.

L'invention permet de calculer la résistance thermique des parois par opposition aux approches de l'art antérieur qui visent uniquement à fiabiliser les prédictions réalisées par le modèle calibré. Elle permet de réaliser une détermination de la résistance thermique des parois locales par opposition aux approches de l'art antérieur qui ne permettent que de caractériser les grandeurs globales. De plus, le procédé selon l'invention ne s'appuie que sur les mesures de températures d'ambiance (température à l'intérieur) de la zone considérée et des zones limitrophes, et de la température extérieure, par opposition aux approches de l'art antérieur qui nécessitent des données additionnelles telles que le taux d'humidité, la consommation par exemple et a fortiori aux approches qui nécessitent une instrumentation avancée : température de surface et/ ou flux de chaleur. En outre, le procédé selon l'invention s'appuie sur des relevés de caractéristiques géométriques simples à réaliser dans la zone considérée (hauteur, largeur des murs et ouvrants) par opposition aux approches de l'art antérieur nécessitant une connaissance de la géométrie complète du bâtiment.

L'invention concerne aussi un dispositif de détermination d'une valeur d'au moins une grandeur thermique d'une zone d'un bâtiment soumise à au moins une donnée thermique environnementale et ayant un comportement thermique réel, le dispositif comprenant des moyens pour mettre en oeuvre les étapes du procédé selon l'invention décrit précédemment.

L'invention concerne également un produit programme d'ordinateur, ledit programme d'ordinateur comprenant des instructions de code permettant d'effectuer les étapes du procédé de détermination selon l'invention lorsque ledit programme est exécuté sur un ordinateur.

L'homme du métier considèrera que la présente invention peut s'implémenter à partir d'éléments matériel et/ou logiciel et opérer sur un ordinateur, un tel ordinateur comprenant des moyens permettant d'opérer les étapes du procédé. L'ordinateur peut être couplé à un système de numérisation, un scanner, un appareil photo. L'invention peut aussi opérer sur une tablette équipée d'une caméra pour l'acquisition des caractéristiques géométriques de la zone du bâtiment. L'invention peut être disponible en tant que produit programme d'ordinateur sur un support lisible par un ordinateur. Le support peut être électronique, magnétique, optique, électromagnétique ou être un support de diffusion de type infrarouge. De tels supports sont par exemple, des mémoires à semi-conducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

## Revendications

1. Procédé, mis en oeuvre par ordinateur, de détermination d'une valeur d'au moins une grandeur thermique (Rth1, Rth2, C) d'une zone (11, 12) d'un bâtiment (10) soumise à au moins une donnée thermique environnementale et ayant un comportement thermique réel, **caractérisé en ce qu'**il comprend :

   • Une étape (201) de relevé des caractéristiques géométriques de la zone (11, 12) du bâtiment (10),
   • Une étape (203) de construction d'un modèle thermique initial de la zone ayant un comportement thermique théorique, le modèle thermique initial utilisant la valeur de la au moins une grandeur thermique (Rth1, Rth2, C), la valeur de la au moins une grandeur thermique étant initialisée à une valeur initiale ($Rth1_0$, $Rth2_0$, $C_0$), l'étape (203) de construction du modèle thermique initial étant basée sur le relevé des caractéristiques géométriques de la zone (11, 12) du bâtiment (10),
   • Une étape d'entrée dans le modèle thermique initial de la zone d'au moins une donnée thermique environnementale issue d'une mesure,
   • Une étape (205) d'exécution d'un algorithme d'identification au modèle thermique initial modifiant la valeur initiale ($Rth1_0$, $Rth2_0$, $C_0$) de la au moins une grandeur thermique jusqu'à obtenir un modèle thermique calibré ayant un comportement thermique sensiblement égal au comportement thermique réel,
   • Une étape (207) d'extraction de la valeur de la au moins une grandeur thermique (Rth1, Rth2, C) du modèle thermique calibré,
   • L'algorithme d'identification étant le krigeage ou un algorithme Particle Swarm Optimization (PSO) ou un algorithme Support Vector Machines (SVM) ou une combinaison d'un algorithme Particle Swarm Optimization (PSO) et Support Vector Machines (SVM).

**2.** Procédé de détermination selon la revendication 1, **caractérisé en ce qu'**il comprend après l'étape (207) d'extraction de la valeur de la au moins une grandeur thermique du modèle thermique calibré une étape d'affichage de la valeur de la au moins une grandeur thermique.

**3.** Procédé de détermination selon l'une quelconque des revendications 1 à 2, **caractérisé en ce que** l'étape (203) de construction du modèle thermique initial est réalisée par analogie électrique.

**4.** Procédé de détermination selon l'une quelconque des revendications précédentes, **caractérisé en ce qu'**il comprend, préalablement à l'étape d'entrée de la au moins une donnée thermique environnementale issue d'une mesure, une étape (209) de mesure de la au moins une donnée thermique environnementale sur une période prédéterminée pour obtenir la au moins une donnée thermique environnementale issue d'une mesure.

**5.** Procédé de détermination selon la revendication 4, **caractérisé en ce que** l'étape (209) de mesure de la au moins une donnée thermique environnementale sur une période prédéterminée comprend la mesure d'au moins une température intérieure de la zone (11, 12) et une température extérieure à la zone (11, 12).

**6.** Procédé de détermination selon l'une quelconque des revendications 4 ou 5, **caractérisé en ce que** l'étape (209) de mesure de la au moins une donnée thermique environnementale sur une période prédéterminée comprend la mesure du rayonnement global du bâtiment (10).

**7.** Procédé de détermination selon l'une quelconque des revendications précédentes, l'algorithme d'identification étant un algorithme Support Vector Machines (SVM), **caractérisé en ce que** l'étape (205) d'exécution d'un algorithme comprend l'exécution d'une approche de régression (SVR).

**8.** Procédé de détermination selon l'une quelconque des revendications 1 à 7, dans lequel la au moins une grandeur thermique est la résistance thermique (Rth1, Rth2) d'une paroi de la zone (11, 12) et/ou la capacité thermique (C) de la zone (11, 12).

**9.** Dispositif de détermination d'une valeur d'au moins une grandeur thermique (Rth1, Rth2, C) d'une zone (11, 12) d'un bâtiment (10) soumise à au moins une donnée thermique environnementale et ayant un comportement thermique réel, le dispositif comprenant des moyens pour mettre en oeuvre les étapes du procédé selon l'une quelconque des revendications 1 à 8.

**10.** Produit programme d'ordinateur, ledit programme d'ordinateur comprenant des instructions de code permettant d'effectuer les étapes du procédé de détermination selon l'une quelconque des revendications 1 à 8, lorsque ledit programme est exécuté sur un ordinateur.

FIG.1

FIG.2

FIG.3

EP 3 358 324 A1

FIG.4

**EP 3 358 324 A1**

Europäisches
Patentamt

European
Patent Office

Office européen
des brevets

# RAPPORT DE RECHERCHE EUROPEENNE

Numéro de la demande

EP 18 15 5010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 985 302 A1 (POULIQUEN HERVE [FR]; ASCHHEIM RAYMOND [FR]) 5 juillet 2013 (2013-07-05) * page 1, ligne 26 - page 21, ligne 2; figures 1-4 * ----- | 1-10 | INV. G01K17/20 G01K15/00 G01K19/00 |
| A | US 2012/065789 A1 (SCELZI MICHAEL CRAIG [US] ET AL) 15 mars 2012 (2012-03-15) * alinéas [0041] - [0139]; figures 1-9 * ----- | 1-10 | |
| A | WO 2013/167278 A2 (MISCHKE GERALD [DE]) 14 novembre 2013 (2013-11-14) * page 17 - page 24; figures 1-9 * ----- | 1-10 | |

| | DOMAINES TECHNIQUES RECHERCHES (IPC) |
|---|---|
| | G01K |

Le présent rapport a été établi pour toutes les revendications

| Lieu de la recherche | Date d'achèvement de la recherche | Examinateur |
|---|---|---|
| La Haye | 30 mai 2018 | Franche, Vincent |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 18 15 5010

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-05-2018

| Document brevet cité au rapport de recherche | | Date de publication | Membre(s) de la famille de brevet(s) | | Date de publication |
|---|---|---|---|---|---|
| FR 2985302 | A1 | 05-07-2013 | EP | 2800958 A2 | 12-11-2014 |
| | | | FR | 2985302 A1 | 05-07-2013 |
| | | | WO | 2013102578 A2 | 11-07-2013 |
| | | | | | |
| US 2012065789 | A1 | 15-03-2012 | EP | 2461144 A2 | 06-06-2012 |
| | | | US | 2012065789 A1 | 15-03-2012 |
| | | | US | 2012194670 A1 | 02-08-2012 |
| | | | US | 2012197562 A1 | 02-08-2012 |
| | | | US | 2012203380 A1 | 09-08-2012 |
| | | | US | 2014328372 A1 | 06-11-2014 |
| | | | US | 2015066404 A1 | 05-03-2015 |
| | | | US | 2016116921 A1 | 28-04-2016 |
| | | | | | |
| WO 2013167278 | A2 | 14-11-2013 | CN | 104412081 A | 11-03-2015 |
| | | | DE | 102012009080 A1 | 14-11-2013 |
| | | | EP | 2847560 A2 | 18-03-2015 |
| | | | US | 2015100267 A1 | 09-04-2015 |
| | | | WO | 2013167278 A2 | 14-11-2013 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **MANGEMATIN, E. ; PANDRAUD, G. ; ROUX, D.** Quick measurements of energy efficiency of buildings. *Comptes Rendus Physique,* 2012, vol. 13 (4), 383-390